Europäisches Patentamt

European Patent Office

Office européen des brevets

(19)

(11) Publication number: **0 202 653**

**A2**

# (12) EUROPEAN PATENT APPLICATION

(21) Application number: **86106843.5**

(22) Date of filing: **20.05.86**

(51) Int. Cl.⁴: **C 02 F 1/68**
**C 02 F 5/08**

(30) Priority: **20.05.85 US 735845**
**20.05.85 US 735849**

(43) Date of publication of application:
**26.11.86 Bulletin 86/48**

(84) Designated Contracting States:
**AT BE CH DE FR GB IT LI LU NL SE**

(71) Applicant: **AUTOTROL CORPORATION**
**5730 North Glen Park Road**
**Milwaukee Wisconsin 53209(US)**

(72) Inventor: **Goudy, Paul R.**
**1231 Hermitage Road**
**Bayside Wisconsin, 53217(US)**

(72) Inventor: **Cassedy, Linn W.**
**580 Dover Drive**
**Roselle Illinois 60172(US)**

(72) Inventor: **Whitaker, Thomas S.**
**800 W. Beachtree Lane**
**Bartlett Illinois 60103(US)**

(74) Representative: **Baillie, Iain Cameron et al,**
**c/o Ladas & Parry Isartorplatz 5**
**D-8000 München 2(DE)**

(54) Dispersible tablet and granulation product and method of formulation of same.

(57) An improved dispersable tablet and granulation product for water treatment. A water soluble material act as a matrix for one or more water soluble dry active water treating agents which are intimately mixed with the matrix material. The matrix material is more water soluble than the water treating agent and provides for rapid dispersing of the water treating agent. In one embodiment, the matrix is formed from a polymeric material and in another form a water treating agent. Also, the polymeric material may be initially treating with an alcohol, then blended with the water treating agent and thereafter water is added to the admixed polymeric material and water treating agent to bond the polymeric molecules together and entrap the water treating agent in the polymeric matrix.

- 1 -

This invention relates to an improved dispersable tablet and granulation product as well as a method of formulation. More particularly, this invention relates to a tablet for treating water, such as cooling tower water for air conditioning purposes, wherein a more water soluble matrix material acts as a dispersant for a less soluble water treating agent.

It is known in the tableting art to employ a more readily dissolvable ingredient with one that is not as highly dissolvable so as to increase the solubility of the less soluble material. For example in formulating aspirin compositions it is known to combine sodium bicarbonate and citric acid (the more soluble materials) with aspirin (the less soluble material). It is also known to mix an antibiotic which has a low water dispersibility with a high water soluble polymeric material to increase the water solubility of the antibiotic. This is set forth in U. S. Patent 3,089,818.

However these prior art examples rely on the production of a gaseous product ($CO_2$) to aid in dissolving the aspirin product or a mutual non-aqueous solvent in the instance of the antibiotic and the polymeric material.

The use of water treating agents such as amino phosphonic acids in combination with triazoles and metal molybdates for water treatment to prevent the disposition of scale is well known. U. S. Patents 4,138,353; 4,217,216; 4,246,030 and 4,277,359 describe this combination as well as the use of a polyacrylic acid or salt thereof with it as a dispersing agent to treat impurities in the water. U. S. Patent 4,277,359 states that the water treating compositions for practical considerations will be sold in a fluid or aqueous state having the active components in solution or suspension. Further, the use of amino phosphonates for water treatment without the use of a polyacrylic acid is also known. For example, U. S. Patent 3,666,664 indicates this as does U. S. 4,101,441 with the latter patent including azole compounds and stating that the compositions can be added to water by conventional bypass feeders using briquettes.

It is known in the drug industry to formulate tablets using ingestible polymeric materials. These materials are employed to protect the active drug from gastrointestinal liquids. U. S. Patent 3,689,634 is representative and discloses that drugs can be released gradually to a living organism after oral ingestion, through a layer of non-inogenic, neutral hydrogel of a polymer of ethylene glycol methacrylate or similar monomer crossed-linked sufficiently to make the polymer insoluble in gastrointestinal liquids.

It is also known to formulate tablet compositions containing polymeric materials wherein an alcohol is utilized in the tableting procedure. For example, in Chemical Abstracts Vol. 80, 1972, 12191c reagent tablets are described which were formed with an outer layer material containing sodium chloride, polyvinylpyrolidone and ethonal. Solid oral pharmaceutical compositions of regulated rate of release are described in Chemical Abstracts Vol. 83, 1975, 168490x. Tablets containing the active drug components were prepared by homogenizing a mixture of the active ingredients with a mixture of stearic acid and Tween in 96% ethanol and a 2% aqueous solution of sodium carboxymethyl-cellulose.

The procedure in preparing a granulation com-

- 3 -

position for a tablet involves one of two general procedures. One is in blending the ingredients with the addition of water. Another is to form a cake of the blending materials and then subsequently grind the cake into the desired particle size. In tablet formulating with polymeric materials using water, the polymer material will tend to become a gelatinous mass and will not blend with the dry powdered active material. There is also a problem in blending materials of the foregoing type wherein the water soluble polymeric material is very hygroscopic and tends to absorb moisture from the air thus making it difficult to blend with the dry active composition or compositions.

Quite unexpectedly it has been found that if the water soluble polymeric material is protected from water prior to blending with the water treating agent and water is later blended with the protected polymeric material and the water treating agent, that a granulation and, after pressing, a tablet results having a high degree of dissolution in water.

It is an advantage of the present invention to provide a water treating composition and method of preparation of a tablet or granulation wherein a more water soluble material acts as a matrix for a dry and less soluble water treating material. Another advantage of this invention is to provide a composition of the foregoing type wherein in one embodiment the more soluble matrix material for the less soluble water treating agent is a polymeric material. Still another advantage of this invention is to provide a dispersing matrix of the foregoing type wherein one of the water treating agents acts as a dispersing agent for the less soluble water treating agent. Yet another advantage of this invention is to provide a water soluble matrix for water treating material which matrix will afford a rapid dispersing of the water treating agent. Still another advantage of this invention is to provide a novel method for granulating and tableting a water soluble polymeric material with a dry water treating material. Yet another advantage of this invention is to provide a water soluble matrix for a water treating material which matrix will afford a rapid dispersing of the water treating agent. Other advantages are a granulation product and tablet which is readily adaptable to being produced and employed with current tablet formulating methods and techniques.

The foregoing advantages are accomplished by the present water treating composition in the form of a tablet or granulation wherein a water soluble matrix material in a granular and discrete form is intimately mixed and bound with a water soluble water treating agent with the water treating agent being less water soluble than the more water soluble matrix material.

In one embodiment a polymeric material is the water soluble matrix. It is utilized in a granular form and is initially treated with an alcohol to blanket the granular resin prior to mixing with a dry, water treating agent. The water treating agent is blended with the blanketed polymeric material and the admixed materials are blended with water. This treating with water effects a binding of the polymer molecules together and entraps the active compound within a polymeric matrix. A granulation results which also retains less air in the tableting process.

In another embodiment an organic compound as represented by one or more water soluble water treating agents are empolyed as the matrix and are admixed with a less water soluble water treating agent without the use of alcohol or water. A tablet can be prepared from a granulation of these materials which rapidly disperses in water.

In still another embodiment, a polymeric material can be employed as the water soluble matrix without the previously described alcohol treatment. It will be formed into a granulation with the water treating agent and subsequently tableted.

A particularly suitable water soluble polymeric material is a polyacrylate and preferably the sodium salt thereof. A resin of this type is commercially available as Goodrite 759 or Cryanmer P35. The water soluble polymeric material should be one that will expand upon contact with water. This means that it will have a high affinity for water. The process of this invention solves the problem of combining low water soluble active materials with this type of resin and will be useful with any polymeric material having these characteristics such as the acrylic polymers including polyacrylate polymers and copolymers such as polymethacrylate, polyacrylamide, polyacrylic-coacrylamide and polymethylacrylamide; vinyl resins including polyvinyl acetate, polyvinyl alcohol and polyvinylmethylether as well as oxides of polyethylene and polypropylene, and polyoxymethylene. The polymeric material can be used in the base form or as a cationic or anionic salt.

One of the water treating materials to be combined with the water soluble polymeric material is a hexamethylenediamine-tetramethylenephosphonic acid compound which is commonly known in the water treating field as Phosphonate. It is commercially available as Dequest 2051. This constituent is used to disrupt crystal formation and thus it inhibits calcium carbonate and magnesium hydroxide scale formation. It also is effective as a weak corrosion inhibitor. Another corrosion inhibitor is benzotriazole or polytriazole. It is sold under the trade name Cobratec.

Sodium molybdate is utilized synergistically with the Cobratec material as a corrosion inhibitor. However it is not as water soluble as the polymeric material or the previously referred to corrosion inhibitors. Another molybdate compound which can be advantageously utilized in the granulation and tablet of this invention is the phosphate. If desired, salts of rare earth elements could also be utilized which have limited solubility in water.

Other chemical compositions which can be employed with the water soluble matrix are water treating biocides as represented by quaternary ammonium compounds or trisodium phosphate which when combined with the matrix can be used in an aqueous solution to treat boiler scale.

Granulating processing aids can also be used. These would include anti-foaming agents such as condensates of ethylene oxide. This material has hydrophobic bases, is a surfactant and reduces foaming by altering the surface tension of the cooling water. A flow enhancer such as fumed silica available commercially as Cabacil can also be utilized to aid in the dry mixing process prior to tableting. Additionally a polyethylene glycol available commercially as Peg. 8000 is employed. This material melts at $140^{O}F$ or liquefies under shear. It is used in a die lubricant in the tableting process. It has the additional property of a bonding agent with the other powders during tableting.

The preferred alcohol for blanketing the water soluble polymeric material from moisture is isopropyl alcohol. It also aids in displacing air from the polymer chain. Other low carbon chain alcohols containing from one to five carbon atoms could be advantageously employed.

Water acts as a binding agent for the water treating materials in affixing them to the polymeric material. It also binds the polymer molecules together and traps the additive materials within the polymeric matrix thus forming a granule.

In order to illustrate the granulation and tablet product of this invention, the following Examples are set forth. They are not intended to limit the invention

- 7 -

in any way.

The following Example I illustrates the use of a polymeric material as the tablet matrix.

EXAMPLE I

| Ingredients | % by Wt. |
|---|---|
| Sodium polyacrylate | 27.675 |
| Hexamethylenediamine-tetramethylenephosphonic acid | 40.500 |
| Benzotriazole | 6.300 |
| Sodium molybdate | 13.500 |
| Ethylene oxide condensation product | .900 |
| Fumed silica | .225 |
| Polyethylene glycol | .900 |
| Isopropyl alcohol | 3.000 |
| Water | 7.000 |
|  | 100.000 |

The sodium polyacrylate polymer is in a dry powder form. It is placed in a folding type mixer such as a Hobart mixer. The isopropyl alcohol is gradually added with mixing until the alcohol and polymer are blended. This procedure is effected in 1-2 minutes. The admixture will have the appearance of wet sand. In a similar manner the phosphonic acid, benzotriazole and molybdate are added individually. After the addition of the sodium molybdate, the ethylene oxide condensation product, fumed silica and polyethylene glycol are added with mixing. The water is subsequently added which acted as an adhesive to form a polymeric matrix for the phosphonic acid, the benzotriazole and the sodium molybdate. Because of the shearing action of the mixer on the polyacrylate polymer and the addition of the water, the water will effect a binding of the polymer molecules together to form the polymeric matrix.

The total weight of all ingredients was 10 lbs. This granulation product was formed into 10,000 tablets using a standard punch and die tableting machine.

The following Example II illustrates the phosphonic acid and the benzotriazole compounds as a matrix for the sodium molybdate.

EXAMPLE II

| Ingredients | % by Wt. |
|---|---|
| Hexamethylenediamine-tetramethylenephosphonic acid | 95.0 |
| Benzotriazole | 2.5 |
| Sodium molybdate | 2.5 |
|  | 100.0 |

All of the above ingredients can compose the same size batch as indicated for the Tablet formulation in Example I. Unlike the procedure there stated they can all be placed together simultaneously in the Hobart mixer and mixed in a dry state until they are thoroughly blended. After blending the resulting composition can be tableted in the manner indicated in Example I.

The following Example III illustrates the sodium polyacrylate as a matrix for the benzotriazole and sodium molybdate without the alcohol treatment described in Exhibit I.

EXAMPLE III

| Ingredients | % by Wt. |
|---|---|
| Sodium polyacrylate | 95.0 |
| Benzotriazole | 2.5 |
| Sodium molybdate | 2.5 |
|  | 100.0 |

All of the above materials can be processed in the manner indicated in Example II to form a desired granulation and tablet.

The reasons for the improved disintegration properties of the tablet formulation of this invention with the more readily soluble material matrix are the following. One resides in the fact that the matrix material acts as a dispersing agent for the less readily dissolvable water treating agent so that the matrix material will dissolve away from the tablet or granulation in an aqueous media and thereby expose the water treatment material while delaying or controlling supersaturation of the lower soluble material in a given solution site. Neither does the tablet or granulation form of this invention rely on gas formation upon dissolution. Bubble formation causes electrostatic attachment of the less soluble material causing it to move in one direction and upwardly into a stratified layer. In contrast, as the more soluble material is dissolved from the tablet or granulation eddy currents are produced in a random manner from the tablet or granulation surface and from the backside of the less soluble material thus propelling the less soluble material in a random direction away from the tablet or granulation and in effect simulating a mechanical mixing. It should also be appreciated that as the more water soluble matrix material, such as the polymeric material, is in a compacted form it has a low surface to volume ratio thus being controllably exposed to the solvent action of the water.

An additional factor for improved distintegration is the use of a tablet form for the polymeric material. As portions of the polymer dissolve into solution they will not tend to surround other portions of the polymeric material because of their size in the tablet. This is a commonly occurring phenomenon in dealing with plastics when attempting to place them in solution and is known as the creation of "fish eyes". This is overcome by the use of the tablet form.

- 10 -

<u>CLAIMS</u>

1. A water treating composition in the form of a tablet or granulation comprising a water soluble matrix material present in discrete particle form and a water soluble dry active water treating agent intimately mixed with said matrix material, characterized in that said matrix material is more water soluble than said water treating agent so that the matrix material will dissolve away from the tablet or granulation in an aqueous media thereby exposing the water treating agent in a manner to control supersaturation of the water treating agent and control exposure of said matrix material.

2. The composition of claim 1, characterized in that said matrix material is a polymeric material such as an acrylic polymer.

3. The compostion of claim 1, characterized in that said matrix material comprises a water soluble organic compound.

4. The composition of claim 1, 2 or 3, characterized in that said water treating agent can comprise a molybdate compound, a phosphoric acid compound and/or a benzotriazole compound.

5. The composition of any of claims 1 to 4, characterized in that the composition is in the form of a tablet granulation or of a tablet.

6. A water treating composition in the form of a tablet or granulation comprising a dry polymeric material and a dry water treating agent, characterized in that said dry polymeric material is treated with an alcohol prior to being admixed with said water treating agent and said admixed polymeric material and said water treating agent being subsequently admixed with water to form a polymer matrix for said water treating agent that will dissolve away.

7. The composition of claim 6, characterized in that said polymeric material is an acrylic polymer or a vinyl resin.

8. The composition of claim 6, characterized in that said polymeric material is an oxide of polyethylene, polypropylene or polyoxymethylene.

9. The composition of claim 6, 7 or 8, characterized in that said water treating agent includes a phosphonic acid compound, a molybdate compound, a benzotriazole compound and/or a phosphonic acid compound.

10. The composition of any of claims 6 to 9, characterized in that said alcohol contains from one to five carbon atoms.

11. A method of formulating a granulation composition characterized by the steps of treating a polymeric material with an alcohol to blanket the polymeric material from moisture and air, admixing said treated polymeric material with a dry ingredient different from said polymeric material, and combining said admixed product with water to bond the polymeric molecules together and entrap said ingredients in a polymeric matrix.

12. The method of claim 11, characterized by the step of forming the granulation into a tablet.

13. The method of claim 11 or 12, characterized in that additional dry ingredients are added to said dry ingredient in a sequential manner.